# EUROPÄISCHE PATENTSCHRIFT

(11) **EP 1 357 301 B1**
(45) Veröffentlichungstag und Bekanntmachung des Hinweises auf die Patenterteilung: **08.03.2006**
(21) Anmeldenummer: 03405251.4
(22) Anmeldetag: 11.04.2003
(51) Int. Cl.: B23B 51/04, E04F 13/08

(54) **Werkzeug zur Herstellung einer Aufnahmebohrung für einen Isolierplattennagel**
Tool for boring the receiving hole of a nail used with insulating panels
Outil pour forer le trou de réception d'un clou utilisé avec des panneaux isolants

(30) Priorität: 24.04.2002 CH 6992002; 20.08.2002 CH 14182002
(43) Veröffentlichungstag der Anmeldung: 29.10.2003
(60) Teilanmeldung: 05026927.3
(73) Patentinhaber: MUNGO BEFESTIGUNGSTECHNIK AG, CH-4603 Olten (CH)
(72) Erfinder: Bappert, Adolf, 4616 Kappel (CH)
(74) Vertreter: Quehl, Horst Max

(56) Entgegenhaltungen:
- EP-A- 1 182 361
- DE-A- 19 605 761
- DE-A- 19 637 581
- DE-U- 7 125 107
- DE-U- 7 913 125
- DE-U- 29 504 565
- GB-A- 238 675
- US-A- 5 435 672

## Beschreibung

Die Erfindung betrifft ein Werkzeug zur Herstellung einer ein Senkloch aufweisenden Aufnahmebohrung für einen Isolierplattennagel.

Ein Werkzeug dieser Art ist bekannt durch die EP 086 452 oder die GB 238 675

Der Erfindung liegt die Aufgabe zugrunde, ein Werkzeug dieser Art zu finden, das einfacher und damit preisgünstig herstellbar ist und das bei seinem Gebrauch eine Arbeitserleichterung bewirkt. Die Lösung dieser Aufgabe erfolgt erfindungsgemäss aufgrund der Merkmale des Patentanspruchs 1. Eine bevor-zugte Ausführungsform der Erfindung ist Gegenstand des abhängigen Patentanspruchs und der folgenden Beschreibung anhand der Zeichnungen zu entnehmen. Es zeigt:
Fig.1 in perspektivischer Darstellung einen Ausschnitt aus einer Bauwerkswand im Bereich einer Aufnahmebohrung und ein Werkzeug nach einer teilweisen Entfernung aus dem Aufnahmeloch,
Fig.2 eine Darstellung entsprechend Fig.1 mit einem in das Aufnahmeloch nach Fig.1 eingesetzten Isolierplattennagel,
Fig.3 den Isolierplattennagel nach Fig.2 in einer Seitenansicht,
Fig.4 eine perspektivische Darstellung von drei Teilen des Werkzeuges zur Herstellung der Aufnahmebohrung, vor dem Zusammenfügen dieser Teile,
Fig.5 eine perspektivische Darstellung des Fräskopfes des Werkzeuges mit zugehöriger Kupplungshülse und
Fig.6 einen Querschnitt durch zwei Teile des Werkzeuges nach Fig.4.

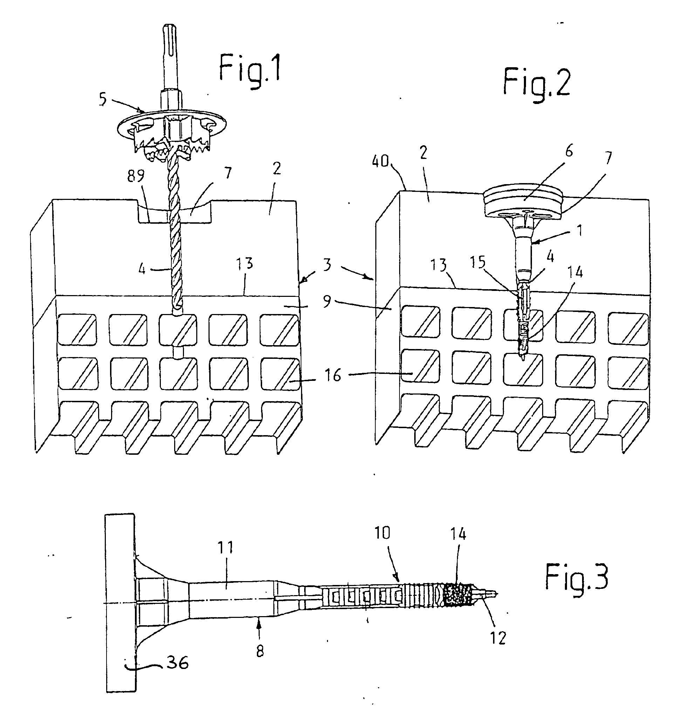

Wie die Darstellungen der Fig.1 und 2 veranschaulichen, wird zum Einbringen eines Isolierplattennagels 1 in einer durch eine Isoliermaterialplatte 2 verkleideten Bauwerkswand 3 vorerst eine abgestufte Aufnahmebohrung 4 mittels eines Werkzeuges 5 in einem Arbeitsgang hergestellt. Die Aufnahmebohrung 4 erstreckt sich von dem für die Aufnahme des flanschartigen Haltekopfes 6 vorgesehenen, äusseren Senkloch 7 mit gleichem Durchmesser von z.B. 10 mm mit einer für die Aufnahme des Nagelschaftes 8 ausreichenden Länge, die dem Dickenmass der Isoliermaterialplatte 2 und einer für die Verankerung im festen Wandmaterial 9 erforderlichen Bohrtiefe entspricht.

Der Nagelschaft 8 hat einen für die klemmende Verankerung im festen Wandmaterial 9 ausgeführten Ankerbereich 10, an den sich ein für die Aufnahme im Isoliermaterial vorgesehener Halteschaftteil 11 anschliesst. Dieser hat einen Durchmesser bzw. eine grösste Quererstreckung, die etwas grösser ist als der Bohrungsdurchmesser der Aufnahmebohrung 4 im betreffenden Bereich, so dass er beim Eindrücken in die Aufnahmebohrung mit elastischer Vorspannung im Material der Isoliermaterialplatte 2 eingeschlossen ist. Die Länge des Halteschaftteiles 11 ist der Dicke der Isoliermaterialplatte 2 derart angepasst, dass der sich anschliessende Ankerbereich 10 des Nagelschaftes 8 sich vom vorderen Nagelende 12 mindestens bis zu der z.B. eine Klebeschicht aufweisenden Trennebene 13 zwischen dem ihn aufnehmenden, festen Wandmaterial 9 und der Isoliermaterialplatte 2 erstreckt und beispielsweise entsprechend dem dargestellten Ausführungsbeispiel diese auch überbrückt. Um diese Länge des Ankerbereiches 10 zu gewährleisten, hat dieser zusätzlich zu seinen vorderseitigen Ankermitteln 14 einen sich an diese anschliessenden Klemmbereich 15. Dieser gewährleistet eine sichere Verankerung des Isolierplattennagels 1 und damit der Isoliermaterialplatte 2 im Bereich des festen Wandmaterials 9, auch wenn dieses grössere Hohlkammern 16 aufweist, wie sie an Hohlbausteinen anzutreffen sind, denn im Bereich der Aussenfläche des festen Wandmaterials 9 ist in jedem Fall kompaktes Material vorhanden.

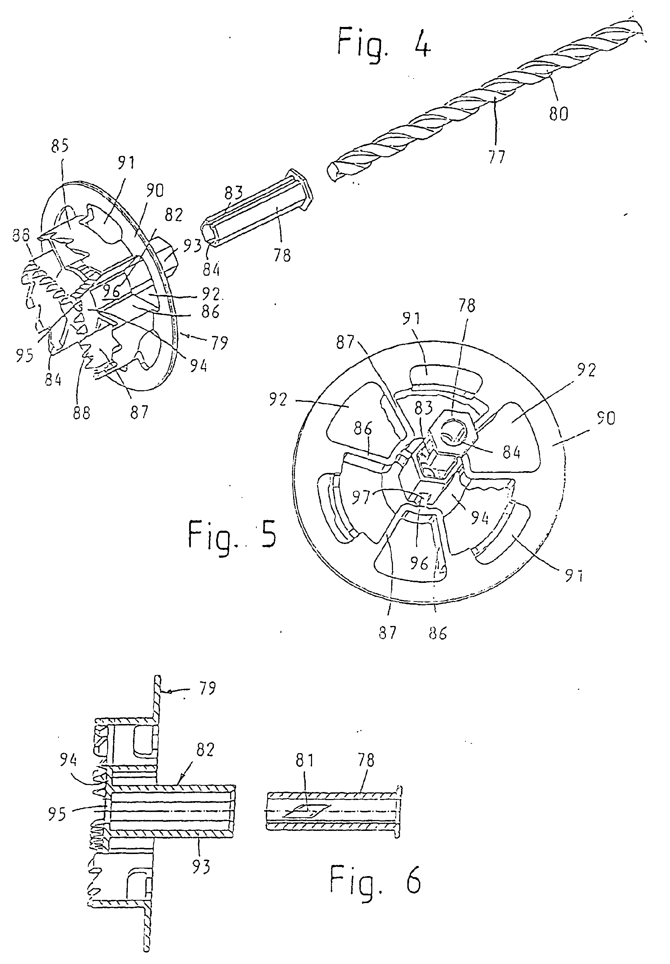

Das Werkzeug 5 zur Herstellung der Aufnahmebohrung 4 einschliesslich ihres Senkloches 7 für die Aufnahme des Haltetellers 36 besteht entsprechend der Darstellung nach Fig.4 aus einem Steinbohrer 77 handelsüblicher Ausführung, einer Kupplungshülse 78 und einem Fräskopf 79. Für die Befestigung des Fräskopfes 79 an dem Steinbohrer 77 wird die einen äusseren Sechskantquerschnitt aufweisende Kupplungshülse 78 bis zum hinteren Ende der schraubengangartigen Spannuten 80 aufgeschraubt, wobei mindestens ein an der Innenwand der Kupplungshülse 78 vorgesehener Eingriffssteg 81 in eine Spannut 80 eingreift, so dass eine verdrehfeste Kopplung gewährleistet ist. Die Kopplung zwischen dem Fräskopf 79 und der Kupplungshülse 78 erfolgt durch Sechskanteingriff zwischen einem einen inneren Sechskantquerschnitt aufweisenden Nabenteil 82 des Fräskopfes 79 und der Kupplungshülse 78, wobei in der Kupplungshülse 78 vorgesehene Längsschlitze 84 einen federelastischen Eingriffskontakt gewährleisten.

Der Fräskopf 79 ist einstückig in Spritztechnik z.B. aus einem Kunststoffmaterial hergestellt. Seine für die Ausfräsung des zylindrischen Senklochs 7 bestimmten, sägezahnförmigen Fräszähne 84 sind an kreisbogenförmigen Sektorteilen 85 vorgesehen. Die Sektorteile 85 sind jeweils durch zwei Radialstege 86 und 87 begrenzt, von denen einer an seiner freien Kante eine Zahnreihe 88 aufweist, die dem Ausfräsen des Isoliermaterials der Isolierplatte 2 aus dem Senkloch 7, bis zur Ausfräsung von dessen Bodenfläche 89 dient. Die Sektorteile 85 und die Radialstege 86,87 sind an einer die Frästiefe begrenzenden Scheibe 90 angeformt, die mehrere Öffnungen 91,92 aufweist, um das ausgefräste Material nach aussen ableiten zu können. Die erhebliche Grösse dieser Öffnungen trägt auch zur Materialeinsparung bei der Herstellung des Fräskopfes 79 in Kunststoffspritztechnik bei. Die Öffnungen 91 im Bereich der Sektorteile 85 setzen sich sogar vom Flansch 90 bis in die Sektorteile 85 fort.

An der Stirnseite des Nabenteiles 82 geht dieses bzw. sein sechskantförmiger Hohlschaft 93 in eine Nabenscheibe 94 über, in der ein zentrales Loch 95 für die Hindurchführung des Steinbohrers 77 vorgesehen ist. Die radial verlaufenden Zahnreihen 88 der Radialstege 87 setzen sich über die stirnseitige Nabenscheibe 94 bis angrenzend an das zentrale Scheibenloch 95 fort.

Die seitlich wirkende Fräskräfte aufnehmenden Radialstege 86,87 sind jeweils mit ihrem radial inneren, in den Umfang der Nabenscheibe 94 übergehenden Bereich durch ein mit diesem Umfang gleichlaufendes Wandstück 96 verbunden, das seinerseits über ein kurzes Radialstegteil 97 mit dem sechskantförmigen Hohlschaft 93 verbunden ist, so dass auf materialsparenden Weise zwischen den Radialstegen und dem zentralen Hohlschaft 93 ein verhältnismässig grosser Aufnahmeraum für Frässpäne vorgesehen ist.

## Patentansprüche

1. Werkzeug zur Herstellung einer ein Senkloch (7) aufweisenden Aufnahmebohrung (4) für einen Isolierplattennagel (1), **dadurch gekennzeichnet, dass** das Werkzeug (5) aus einem im Spritzgiessverfahren hergestellten Fräskopf (79), einem Steinbohrer (77) und einer zum Eingriff mit mindestens einer Spannut (80) des Steinbohrers und mit dem Fräskopf (79) bestimmten Kupplungshülse (78) besteht, wobei der Eingriff in eine Spannut (80) durch mindestens ein an der Kupplungshülse (78) vorgesehenes, nach innen gerichtetes Stegteil (81) erfolgt und für den Eingriff zwischen der Kupplungshülse (78) und dem Fräskopf (79) an beiden sich entsprechende Querschnittsformen vorgesehen sind.

2. Werkzeug nach Anspruch 1, **dadurch gekennzeichnet, dass** der Fräskopf (79) an kreisbogenförmigen Sektorteilen (85) sägenartig Fräszähne (84) aufweist und an Radialstegen (87) jeweils eine Zahnreihe (88) vorgesehen ist, wobei die Sektorteile (85) und die Radialstege (87) an einer die Frästiefe begrenzenden Scheibe (90) angeformt sind, die mehrere zum Ableiten von Frässpänen bestimmte Öffnungen (91,92) aufweist.

## Claims

1. Tool for producing a mounting hole (4) with a sink hole (7) for an insulating board nail (1) **characterised in that** the tool (5) consists of a milling head (79) produced through injection moulding, a rock drill (77) and a coupling sleeve (78) , the latter being provided for engaging into at least one chip groove (80) of the rock drill and into the milling head (79), wherein the engagement in a chip groove (80) takes place by means of at least one inwardly directed web (81) of the coupling sleeve (78) and for interengagement between the coupling sleeve (78) and the milling head (79) appropriate cross-sectional forms being provided on both of them.

2. Tool according to claim 1 **characterised in that** the milling head (79) has serrated milling teeth (84) at the circular crescent shaped sector parts (85), a series of teeth (88) are provided at radial webs (87), wherein the sector parts (85) and the radial webs (87) are moulded on a plate (90) that limits the milling depth and has multiple openings (91, 92) to guide out the milling chips.

## Revendications

1. Outil pour la fabrication d'un alésage récepteur (4) présentant un puits (7) pour un clou pour plaque d'isolation (1), **caractérisé en ce que** l'outil (5) consiste en une tête de fraisage (79) fabriquée par procédé de moulage par injection, d'un perceur de pierre (77) et d'un manchon d'accouplement (78) destiné à s'engrener avec au moins une rainure de serrage (80) du perceur de pierre et avec la tête de fraisage (79), l'engrènement dans une rainure de serrage (80) étant assuré au moyen d'au moins une pièce de traverse (81) prévue sur le manchon d'accouplement (78) et orientée vers l'intérieur et étant prévu, pour l'engrènement entre le manchon d'accouplement (78) et la tête de fraisage (79), des formes de section transversale en coïncidence mutuelle sur ces deux éléments.

2. Outil selon la revendication 1, **caractérisé en ce que** la tête de fraisage (79) présente des dents de fraisage (84) en forme de dents de scie sur des pièces locales en forme d'arcs de cercle (85) et qu'il est prévu sur, des traverses radiales (87), à chaque fois une série de dents (88), alors que les pièces locales (85) et les traverses radiales (87) sont formées sur une plaque (90) limitant la profondeur de fraisage et présentant plusieurs orifices (91, 92) destinés à l'évacuation des copeaux de fraisage.
